# NEW EUROPEAN PATENT SPECIFICATION

(11) **EP 0 163 395 B2**
(45) Date of publication and mention of the opposition decision: **03.12.1997**
(45) Mention of the grant of the patent: 21.12.1988
(21) Application number: 85302520.3
(22) Date of filing: 10.04.1985
(51) Int. Cl.: A23K 1/16, A23K 1/175, A23K 1/18

(54) **Process for the production of feedstuffs**
Verfahren zur Herstellung von Futtermitteln
Procédé pour la production de fourrage

(30) Priority: 10.04.1984 GB 8409213; 01.08.1984 GB 8419582
(43) Date of publication of application: 04.12.1985
(73) Proprietor: BALFOUR MANUFACTURING COMPANY LIMITED, Dublin 2 (IE)
(72) Inventor: McAskie, William, Co. Cavan (IE)
(74) Representative: Woods, Geoffrey Corlett

(56) References cited:
- DE-A- 1 217 381
- DE-A- 2 823 002
- GB-A- 2 113 521
- US-A- 2 890 232
- US-A- 3 803 188
- US-A- 4 160 041
- US-A- 4 307 027
- Journal of animal science, vol. 55, n 4, 1982, pp. 957-963 T.C. Jenkins and D.L. Palmquist
- Hollemann-Richter, Lehrbuch der organischen Chemie, 37-41, Auflage S.83ff
- Kemper-Fladt, 1968, Chemie A. Abschn. 54.2
- Hollemann-Wiberg, Lehrbuch der anorganischen Chemie, Auflage 1976, S. 166

## Description

This invention relates to the production of feedstuffs, and in particular edible fatty acid salts, and feedstuffs protected therewith.

While the processes of fermentation and digestion which take place in the rumen of ruminant animals are largely beneficial to such animals under natural feeding conditions, modern husbandry may require that, for optimum production of meat and/or milk, such animals should be fed a proportion of their dietary requirements in the form of nutrients which ideally should not undergo any degradation or alteration in the rumen. Also, it is necessary that such nutrients should not interfere with the normal processes of rumen fermentation.

For example, it is beneficial that a cow should be fed sufficient quantities of fat to maximize her milk production, but it is known that if a mature cow is fed more than about 500 g per day of fat, the normal process of rumen fermentation is adversely affected. In particular, triglycerides and free fatty acids can physically coat fibrous or cellulosic material in the rumen and thus prevent it from being broken down by the rumen bacteria. This effect can alter the energy metabolism of the animal and reduce the yield of milk. Free fatty acids are toxic to certain bacteria in the rumen and this too can have an adverse effect on the total digestibility of the feed. In addition, under normal conditions, unsaturated fats fed to ruminant animals are hydrogenated in the rumen with the result that most of the fats in milk are saturated. The production of milk containing substantial amounts of unsaturated fatty acid residues requires that the fat be protected from normal rumen processes.

In the case of protein metabolism, it is known that at certain periods during the growth, development and lactation of cows, insufficient microbial protein is produced in the rumen to meet the animal's full requirements for maximum growth or maximum milk production. It is therefore current practice to feed to cows feed supplements containing a high proportion of rumen-degradable protein, which is rapidly converted into microbial protein in the rumen. However, it is preferable to feed undegradable protein to cows since this can result in an improvement in growth rate and feed conversion efficiency as compared with the use of an equal weight of degradable protein.

There have been a number of proposals of methods for protecting fats and proteins from the effects of rumen fermentation. These methods have for the most part depended upon protecting such fats and/or proteins (and sometimes other nutritional materials such as minerals or essential vitamins) in an insoluble coating which resists the fermentation processes of the rumen.

In our British Specification GB-A-2113521 we have described feedstuffs comprising a nutritional material, e.g. soya meal, protected by dispersion in a protective coating of an edible water-insoluble fatty acid salt, e.g. a calcium salt of an acid oil such as beef tallow acid oil or soya acid oil. These feedstuffs are made either by precipitation of the water insoluble salt from an aqueous medium, or from direct reaction of the fatty acid and an appropriate base such as calcium oxide. In the former process, the fatty acid salt is separated by filtration and then dried. In the latter case, the salt is obtained in the form of a block which may be fed to ruminants in that form since the latter can assimilate the feedstuff by licking the block. However, the manufacture of feedstuffs produced in accordance with our aforesaid British specification presents practical difficulties. If the insoluble fatty acid salt is produced by precipitation, a dry powdered product can only be obtained by a difficult filtration followed by a drying process which involves considerable input of heat and is therefore expensive. A feedstuff block produced by the alternative process is difficult to grind satisfactorily and when ground is liable to produce an unacceptable dusty product. There is therefore a need for a process for producing an edible water insoluble fatty acid salt, optionally containing a further nutritional material, by which a friable product is obtained directly without any filtration, drying or comminuting step. The present invention provides a process whereby this objective can be achieved.

The present invention provides a continuously process for the production of a feedstuff for ruminants comprising a water-insoluble salt of one or more edible higher fatty acids, and preferably a further nutritional material, which may be, for example, a water-insoluble protein, fat, carbohydrate, mineral, or vitamin, which is protected against alteration in the rumen by the said water-insoluble salt. This new process comprises continuously forming a mixture of calcium oxide or other basic oxide forming a water-insoluble salt with an edible fatty acid, one or more edible higher fatty acids containing at least 12 carbon atoms per molecule, and optionally the further nutritional material, under conditions such that the said nutritional material (when present) is impregnated with fatty acid, continuously adding water to the said mixture and allowing the calcium (or other) oxide to react exothermically with the said acid to form the calcium (or other water-insoluble) salt thereof, and continuously spreading out the still hot, reacting mixture on a moving belt on which the reaction proceeds to completion so that most of the water is boiled off while the mixture is on the belt and the latter is long enough to allow the mixture to cool substantially to room temperature and become converted to a dry friable product; the residence time of the mixture on the belt being at least 2 1/2 hours. The reaction between the oxide and the acid normally starts spontaneously with little delay after the water has been added, but if necessary the mixture may be heated (before or after the addition of the water) to ensure that rapid reaction occurs.

This process may also be operated without a separate nutritional material. i.e. as an advantageous means for preparing a water-insoluble edible fatty acid salt in a convenient form. This embodiment of the invention comprises forming a mixture of calcium oxide or another water-insoluble basic oxide and a fatty acid, adding water, and further mixing of the said mixture to cause the calcium (or other metal) oxide to react with the said acid to form the calcium (or other water-insoluble) salt thereof, and spreading out the still hot reacting mixture on a moving belt on which the reaction proceeds to completion so that most of the water is boiled off while the mixture is on the belt and the latter is long enough to allow the mixture to cool substantially to room temperature and become converted to a dry friable product.

The invention is however advantageously applied to the protection of proteinaceous feedstuffs which may he degraded by, or interfere with, digestion in the rumen. Thus, it is particularly advantageous to produce feedstuffs comprising a good quality animal or vegetable protein such as, for example, grass meal, lucerne meal, field means, pea protein, coconut meal, cotton seed, ground nut, linseed, palm kernel, soya bean, defatted soya bean meal, sunflower seed, rape seed, fish meal, meat and bone meal, skim milk, whey protein, distillers by-products, barley, maize, oats, rye, rice, gluten meal, locust bean, canola, feather meal, sorghum, safflower seed, single cell protein, or yeast. All of these materials are suitable, if necessary after appropriate comminution, for feeding to ruminants to improve the quality of their protein intake. The invention is particularly described below with reference to the use of defatted soya bean meal, but it will be understood that other water-insoluble proteinaceous feedstuffs can be substituted therefor.

The fatty acid may be any edible higher fatty acid which forms a water-insoluble calcium salt, for example stearic acid, lauric acid, myristic acid, palmitic acid, oleic acid, linolenic acid or linoleic acid, but it is normally preferred to use a naturally occurring mixture of fatty acids derived from, for example, beef tallow, soya oil, palm oil, corn oil, rapeseed oil or lard. Such materials are produced as by-products of oil refining. They normally contain, in addition to one or more fatty acids, also a proportion of the corresponding glycerides. The presence of such glycerides does not interfere with the process of the invention. Beef tallow acid oil and palm acid oil are particularly suitable for use in the present invention.

Calcium oxide is the preferred basic oxide for use in the new process, but other basic oxides which are non-toxic and form water-insoluble fatty acid salts, e.g. magnesium oxide, can in principle be used.

In the new process, the fatty acid, the nutritional material (when present), and the non-toxic basic oxide are first rapidly mixed, and water is added. While it is possible to mix all the ingredients simultaneously, it is preferred to add the water after the other ingredients have been thoroughly mixed. If desired, the fatty acid is preheated, e.g. to 80-100°C., to lower its viscosity. After the addition of water a rapid reaction occurs between the oxide, the fatty acid and the water. This reaction is sufficiently exothermic to raise the temperature of the mixture to over 100°C under normal conditions, and the mixture is rapidly spread out, preferably on a conveyor belt, so that the steam formed is rapidly dispersed. A friable, easy to handle product is thus rapidly and conveniently obtained.

Any proteinaceous or other nutritional material used is likely to contain a small proportion of water even though it appears to be "dry". The presence of such small amounts of water should be taken into account in forming the initial mixture but drying of these starting materials is not normally required.

In the first stage of the process, the fatty acid impregnates any nutritional material present, since the latter is normally porous. This impregnation is important since it ensures that the nutritional material becomes protected by the insoluble fatty acid salt.

The amount of water added is sufficient to permit rapid reaction between the fatty acid and the calcium (or other) oxide but not so great as to cause any problem or unnecessary expenditure of energy in subsequently removing it to give a dry product. It may sometimes be advantageous to add the required water in the form of liquid water preheated to near the boiling point, e.g. to 90°C. Alternatively, or in addition, the fatty acid may be hot when added to the mixture. However, under normal conditions, the calcium oxide and the fatty acid react with sufficient generation of heat to raise the temperature sufficiently so that when the product is spread out evaporation takes place and a dry product is easily and rapidly obtained.

The proportions of the starting materials are chosen so that the product obtained shall have the desired nutritional composition and also the requisite physical properties. Usually, a satisfactory product is obtained if the fatty acids and the nutritional material are used in approximately equal weights, for example from 35-60% of fatty acid to 65-40% of nutritional material. The proportion of the basic oxide used is substantially the amount calculated to react with the total fatty acids present. The proportion of water added is preferably the minimum amount consistent with complete reaction between the fatty acids and the basic oxide. For example, if the nutritional material is defatted soya bean meal (containing not more than 2% of fat and 12% of water) and the fatty acids are palm acid oil (containing about 75% of fatty acids consisting mainly of palmitic acid 43%, oleic acid 43%, and linoleic acid 9%), and the basic oxide is calcium oxide, then it is preferred to use one part by weight of calcium oxide to seven parts by weight of the acid oil and eight parts by weight of the soya meal. The amount of water then added may be 10-40% or better 20-30% and preferably about 20% by weight of the total weight of the acid oil and the calcium oxide.

It is a particular advantage of the present invention that it is operated continuously. Thus the soya meal or other nutritional material may be mixed with the acid oil, and calcium oxide, water is then added, and the reacting mixture is then fed rapidly through a nozzle onto a moving belt on which the reaction proceeds to completion. Most of the water present is boiled off while the mixture is on the belt, and the latter is long enough to allow the mixture to cool substantially to room temperature and become converted to a dry friable product before it is sized, sieved and bagged.

It is a further advantage of the process that when the nutritional material is ground whole soya bean, the trypsin inhibitor present therein is substantially destroyed by the heat evolved during the process.

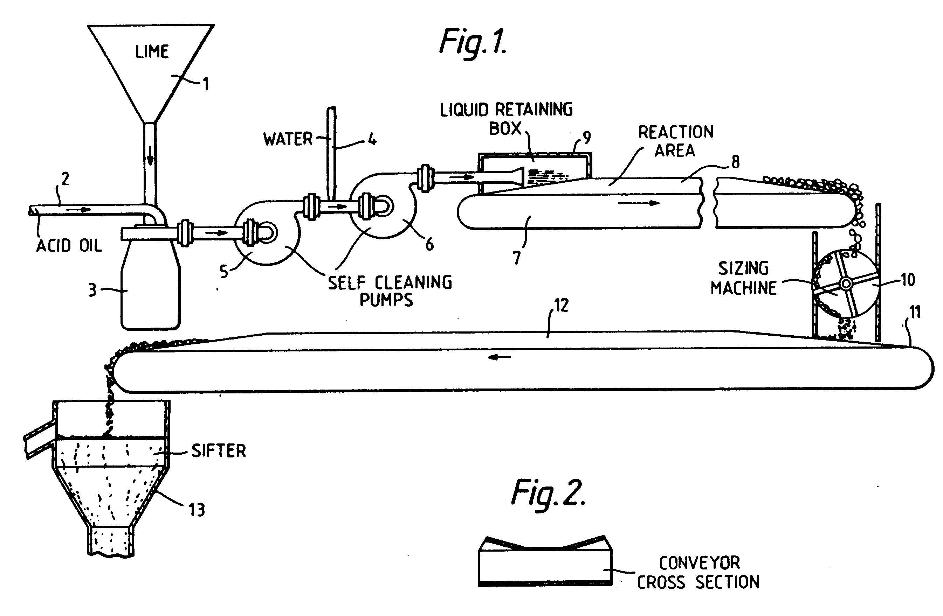

A preferred apparatus for operating the process of the present invention is shown diagrammatically in the accompanying drawing. In the drawing, calcium oxide (lime) from the hopper 1, and hot acid oil (at 100°C) from line 2 are mixed in predetermined proportions in the mixing pump 3. Water at ambient temperature is added through line 4. The mixture of starting materials at about 100°C is fed through mixing pumps 5 and 6 and rapidly discharged as a semi-liquid reacting mass at about 105°C on to the continuously moving conveyor belt 7 as a layer 8. A liquid retaining box 9 is provided to keep the reacting mixture while it is still liquid from spilling over the edges of the conveyor belt. The latter has a concave cross-section as shown in Figure 2. Steam is evolved from the mixture while it is on the belt. At the end of belt 7 lumps of the product fall through a sizing machine 10 onto a second continuous conveyor belt 11 to form a layer 12. In this layer the reaction and the drying are completed.

From the belt 11, the now dry product falls into the sifter 13 from which it is collected in appropriate bags for transportation and storage.

This arrangement can readily produce one tonne or more per hour of bagged product containing less than 5% by weight of water.

Under typical conditions, the mixture of calcium oxide, fatty acid, water, and nutritional material (if any) can be formed, thoroughly mixed and discharged on to the first conveyor belt 7 in 10 to 20 seconds, e.g. 12 to 15 seconds. The residence time on the first belt, which may be for example four feet (120 cm.) across, is typically about 30 minutes, and the total overall time from mixing to bagging may be up to about 3 hours.

The initially formed mixture containing fatty acid, calcium oxide and water is very sticky and it is important that the pumps 3. 5, and 6 are constructed so as to be able to handle the mixture without clogging or the need for frequent cleaning. Centrifugal pumps have been used with their impellers constructed so as to fit very closely the interim surface of the pump housing. This produces a self-leaning action in the pump which can operate for long periods without any stoppages for cleaning being required.

It is a simple matter, if desired, to include a separate nutritional material in the process described above so that, in the final product, the calcium (or other) salt of the fatty acid forms a protective layer on the nutritional material.

Some feedstuffs, especially liquid feedstuffs containing a substantial amount of water, e.g., whey, may be added to the mixture as it is discharged on to the belt 7. The heat of reaction is sufficient to dry substantial proportions of such feedstuffs.

## Claims

1. A continuous process for the production of a feedstuff for ruminants which comprises continuously forming a mixture of calcium oxide or other basic oxide forming a water-insoluble salt with an edible fatty acid, one or more edible higher fatty acids containing at least 12 carbon atoms per molecule, and optionally a further nutritional material under conditions such that the said nutritional material (when present) is impregnated with fatty acid, continuously adding water to the said mixture, and allowing the calcium or other oxide to react exothermically with the said acid to form the calcium or other water-insoluble salt thereof, and continuously spreading out the still hot reacting mixture on a moving belt on which the reaction proceeds to completion so that most of the water is boiled off while the mixture is on the belt and the latter is long enough to allow the mixture to cool substantially to room temperature and become converted to a dry friable product, the residence time of the mixture on the belt being at least 2½ hours.

2. A process according to claim 1 in which a mixture is formed of calcium oxide and fatty acid, water is added, and the-mixture is further mixed to cause the calcium oxide to react with the said acid to form the calcium salt thereof, and the still hot reacting mixture is spread out on a moving belt on which the reaction proceeds to completion so that most of the water is boiled off while the mixture is on the belt and the latter is long enough to allow the mixture to cool substantially to room temperature and become converted to a dry friable product.

3. A process according to claim 1 in which a mixture of calcium oxide, one or more fatty acids, and a proteinaceous feedstuff is formed under conditions such that the said feedstuff is impregnated with fatty acid, water is added to the mixture, and the calcium oxide is allowed to react exothermically with the said acid to form the calcium salt thereof which protects the proteinaceous feedstuff against alteration in the rumen, and the still hot reacting mixture is spread out on a moving belt on which the reaction proceeds to completion so that most of the water is boiled off while the mixture is on the belt and the latter is long enough to allow the mixture to cool substantially to room temperature and become converted to a dry friable product.

4. A process according to claim 3 in which the proteinaceous feedstuff is defatted soya bean meal.

5. Process according to claim 3 in which the nutritional material is ground whole soya bean meal and the mixture reacts at a temperature high enough to destroy the trypsin inhibitor present in the soya bean.

6. A process according to any one of claims 3 to 5 in which the mixture formed contains from 35 to 60% by weight of fatty acid and 65 to 40% by weight of then nutritional material, and an amount of the basic oxide required to react with the total fatty acids present.

7. A process according to any one of claims 1 to 6 in which the fatty acid is stearic acid, lauric acid, myristic acid, palmitic acid, oleic acid, linoleic acid and/or linolenic acid, or a naturally occurring mixture of fatty acids derived from beef tallow, soya oil, palm oil, corn oil, rapeseed oil or lard.

8. A process according to any one of claims 1 to 7 in which the amount of water included in the mixture is 10 to 40% by weight of the total weight of fatty acid and basic oxide.

9. A feedstuff for ruminants comprising a water insoluble salt of an edible higher fatty acid when produced by the process of any of claims 1 to 8.

10. A nutritional material protected with an edible water insoluble fatty acid salt against alteration in the rumen when produced by the process of claims 3 to 6.

## Patentansprüche

1. Kontinuierliches Verfahren zum Herstellen eines Futtermittels für Wiederkäuer, wobei fortlaufend eine Mischung aus Calciumoxid oder einem anderen ein wasserunlösliches Salz von einer genießbaren Fettsäure bildenden basischen Oxid, einer oder mehreren genießbaren höheren Fettsäuren, die mindestens 12 Kohlenstoffatome pro Molekül enthalten, und gegebenenfalls einem weiteren Nährstoff unter solchen Bedingnen hergestellt wird, daß der Nährstoff (falls vorhanden) mit Fettsäure imprägniert wird, der Mischung fortlaufend Wasser zugegeben und das Calciumoxid oder das andere Oxid zur exothermen Reaktion mit der erwähnten Säure gebracht wird, damit sich von dieser das Calcium- oder das andere wasserunlösliche Salz bildet, und die noch heiße Reaktionsmischung fortlaufend auf ein sich bewegendes Band ausgebreitet wird, so daß das meiste Wasser spontan aus der Mischung verdampft, während sich die Mischung auf dem Band befindet und dieses lang genug ist, damit die Mischung im wesentlichen auf Raumtemperatur abkühlen und in ein trockenes, krümeliges Produkt umgewandelt werden kann, wobei die Verweildauer der Mischung auf dem Band mindestens zweieinhalb Stunden ist.

2. Verfahren nach Anspruch 1, wobei die Mischung aus Calciumoxid und Fettsäure hergestellt, Wasser zugegeben und die Mischung weiter durchgemischt wird, um die Reaktion des Calciumoxids mit der Säure zwecks Bildung des Calciumsalzes von dieser in Gang zu setzen, und die noch heiße Reaktionsmischung auf ein sich bewegendes Band ausgebreitet wird, auf dem die Reaktion bis zur Vollendung weiterläuft, so daß das meiste Wasser spontan verdampft, während sich die Mischung auf dem Band befindet und dieses lang genug ist, damit die Mischung im wesentlichen auf Raumtemperatur abkühlen und in ein trockenes, krümeliges Produkt umgewandelt werden kann.

3. Verfahren nach Anspruch 1, wobei eine Mischung aus Calciumoxid, einer oder mehreren Fettsäuren und einem proteinhaltigen Futtermittel hergestellt wird unter solchen Bedingungen, daß das erwähnte Futtermittel mit Fettsäure imprägniert, der Mischung Wasser zugegeben und das Calciumoxid zur exothermen Reaktion mit der erwähnten Säure gebracht wird, um das Calciumsalz von dieser zu bilden, welches das proteinhaltige Futtermittel im Pansen gegen Veränderung schützt, und die noch heiße Reaktionsmischung auf ein sich bewegendes Band ausgebreitet wird, auf dem die Reaktion bis zur Vollendung weiterläuft, so daß das meiste Wasser spontan verdampft, während sich die Mischung auf dem Band befindet und dieses lang genug ist, damit die Mischung im wesentlichen auf Raumtemperatur abkühlen und in ein trockenes, krümeliges Produkt umgewandelt werden kann.

4. Verfahren nach Anspruch 3, wobei das proteinhaltige Futtermittel entfettetes Sojabohnenmehl ist.

5. Verfahren nach Anspruch 3, wobei der Nährstoff durch Mahlen ganzer Sojabohnen erhaltenes Mehl ist und die Mischung bei einer Temperatur reagiert, die genügend hoch ist, um den in der Sojabohne enthaltenen Trypsininhibitor zu zerstören.

6. Verfahren nach einem der Ansprüche 3 bis 5, wobei die gebildete Mischung 35 bis 60 Gew.-% Feffsäure und 65 bis 40 Gew.-% Nährstoff und eine solche Menge an basichem Oxid enthält, die für die vollständige Umsetzung der vorhandenen Fettsäuren benötigt wird.

7. Verfahren nach einem der Ansprüche 1 bis 6, wobei als Fettsäure Stearinsäure, Laurinsäure, Myristinsäure, Palmitinsäure, Oleinsäure, Linolsäure und/oder Linolensäure oder eine in der Natur vorkommende Mischung von aus Rindertalg, Sojaöl, Palmöl, Maisöl, Rapssamenöl oder Schweineschmalz gewonnenen Fettsäuren verwendet wird.

8. Verfahren nach einem der Ansprüche 1 bis 7, wobei die in der Mischung eingeschlossene Wassermenge 10 bis 40 Gew.-% der Gesamtmenge an Fettsäure und basischem Oxid beträgt.

9. Futtermittel für Wiederkäuer, das ein wasserunlösliches Salz von einer genießbaren höheren Fettsäure enthält, erhältlich nach dem Ferfahren gemäß einem der Ansprüche 1 bis 8.

10. Nährstoff, der durch ein genießbbares, wasserunlösliches Fettsäuresalz gegen Veränderungen im Pansen geschützt ist, erhältlich nach dem Verfahren der Ansprüche 3 bis 6.

## Revendications

1. Procédé continu pour la production d'un aliment pour ruminants qui consiste à former en continu un mélange d'oxyde de calcium ou d'un autre oxyde basique formant un sel insoluble dans l'eau avec un acide gras comestible, d'un ou plusieurs acides gras supérieurs comestibles contenant au moins 12 atomes de carbone par molécule, et facultativement d'une autre matière nutritive dans des conditions telles que ladite matière nutritive (lorsqu'elle est présente) soit imprégnée d'acide gras, à ajouter en continu de l'eau audit mélange et à laisser l'oxyde de calcium ou l'autre oxyde réagir exothermiquement avec ledit acide pour former son sel de calcium ou un autre sel insoluble dans l'eau, et à étaler en continu le mélange en réaction encore chaud sur une courroie transporteuse sur laquelle la réaction se poursuit jusqu'à la fin, de sorte que la majeure partie de l'eau est chassée par ébullition tandis que le mélange est sur la courroie et cette dernière est suffisamment longue pour permettre au mélange de refroidir pratiquement jusqu'à la température ambiante et de se transformer en un produit friable sec, le temps de séjour du mélange sur la courroie étant d'au moins 2 heures 1/2.

2. Procédé selon la revendication 1, dans lequel on forme un mélange d'oxyde de calcium et d'acide gras, on ajoute de l'eau et on mélange encore le mélange pour faire réagir l'oxyde de calcium avec ledit acide pour former son sel de calcium et on étale le mélange en réaction encore chaud sur une courroie transporteuse sur laquelle la réaction se poursuit jusqu'à la fin, de sorte que la majeure partie de l'eau est chassée par ébullition tandis que le mélange est sur la courroie et cette dernière est suffisamment longue pour permettre au mélange de refroidir pratiquement jusqu'à la température ambiante et de se transformer en un produit friable sec.

3. Procédé selon la revendication 1, dans lequel on forme un mélange d'oxyde de calcium, d'un ou plusieurs acides gras et d'un aliment protéinique dans des conditions telles que ledit aliment soit imprégné d'acide gras, on ajoute de l'eau au mélange et on laisse l'oxyde de calcium réagir exothermiquement avec ledit acide pour former son sel de calcium qui progège l'aliment protéinique contre l'altération dans le rumen et on étale le mélange en réaction encore chaud sur une courroie transporteuse sur laquelle la réaction se poursuit jusqu'à la fin, de sorte que la majeure partie de l'eau est chassée par ébullition tandis que le mélange est sur la courroie et cette dernière est suffisamment longue pour permettre au mélange de refroidir pratiquement jusqu'à la température ambiante et de se transformer en un produit friable sec.

4. Procédé selon la revendication 3, dans lequel l'aliment protéinique est de la farine de soja dégraissée.

5. Procédé selon la revendication 3, dans lequel la matière nutritive est de la farine de soja entier broyé et le mélange réagit à une température suffisamment élevée pour détruire l'inhibiteur de trypsine présent dans le soja.

6. Procédé selon l'une quelconque des revendications 3 à 5, dans lequel le mélange formé contient de 35 à 60 % en poids d'acide gras et de 65 à 40 % en poids de la matière nutritive et une quantité de l'oxyde basique nécessaire pour réagir avec les acides gras totaux présents.

7. Procédé selon l'une quelconque des revendications 1 à 6, dans lequel l'acide gras est l'acide stéarique, l'acide laurique, l'acide myristique, l'acide palmitique, l'acide oléique, l'acide linoléique et/ou l'acide linolénique ou un mélange naturel d'acides gras dérivé du suif de boeuf, de l'huile de soja, de l'huile de palme, de l'huile de maïs, de l'huile de graines de colza ou du saindoux.

8. Procédé selon l'une quelconque des revendications 1 à 7, dans lequel la quantité d'eau comprise dans le mélange est de 10 à 40% en poids du poids total de l'acide gras et de l'oxyde basique.

9. Aliment pour ruminants comprenant un sel insoluble dans l'eau d'un acide gras supérieur comestible, lorsqu'il est produit par le procédé selon l'une quelconque des revendications 1 à 8.

10. Matière nutritive protégée par un sel d'acide gras comestible insoluble dans l'eau contre l'altération dans le rumen, lorsqu'elle est produite par le procédé selon les revendications 3 à 6.
